# EUROPÄISCHE PATENTSCHRIFT

(11) **EP 0 474 893 B1**
(45) Veröffentlichungstag und Bekanntmachung des Hinweises auf die Patenterteilung: **23.11.1994**
(21) Anmeldenummer: 90117375.7
(22) Anmeldetag: 10.09.1990
(51) Int. Cl.: F02C 3/02, F02C 3/30

(54) **Gasturbinenanordnung**
Gasturbine system
Système de turbine à gaz

(43) Veröffentlichungstag der Anmeldung: 18.03.1992
(73) Patentinhaber: ASEA BROWN BOVERI AG, 5400 Baden (CH)
(72) Erfinder: Keller, Jakob, Dr., CH-5605 Dottikon (CH)

(56) Entgegenhaltungen:
- EP-A- 0 179 233
- CH-A- 348 577
- DE-B- 1 102 490
- DE-B- 1 626 523
- DE-C- 928 857
- US-A- 3 003 315

## Beschreibung

### TECHNISCHES GEBIET

Bei der Erfindung wird ausgegangen von einer Gasturbinenanordnung nach dem Oberbegriff des Patentanspruchs 1.

### STAND DER TECHNIK

Aus der Schrift DE-C-982 857 ist eine Gasturbinenanordnung bekannt, bei der ein Energietauscher der Gasturbine vorgeschaltet ist. Dem Energietauscher ist eine separate, mit einer Wassereinspritzung versehene Brennkammer unmittelbar vorgeschaltet. Der den Energietauscher verlassende Strom aufgeladener Luft wird unmittelbar nach dem Austreten aus dem Energietauscher geteilt, wonach der eine Teil in die separate Brennkammer und der andere Teil in eine weitere, der Gasturbine vorgeschaltete, Brennkammer geleitet wird.

Eine Gasturbinenanordnung der eingangs genannten Art ist beispielsweise aus EP-0 179 233 B1 bekannt. Bei dieser Gasturbinenanordnung ist ein Energietauscher der Gasturbine vorgeschaltet, welcher Verbrennungsluft, die in einem Niederdruckverdichter vorverdichtet wurde, auf ein noch höheres Druckniveau bringt. Eine Brennkammer ist dem Energietauscher vorgeschaltet, die mit Gas oder Öl als Brennstoff betrieben wird und deren Verbrennungsluft aus einem Hochdruckkanal für die aufgeladene Luft auf dem höheren Druckniveau nach dem Energietauscher abgezweigt wird. Der Hochdruckkanal führt den Hauptteil der aufgeladenen Luft in eine Hauptbrennkammer, in der Gas oder Öl zusammen mit dieser Luft verbrannt werden zu Treibgas unter hohem Druck und hoher Temperatur, welches in den Hochdruckteil der Gasturbine eingeleitet wird und diesen antreibt. Die etwas abgekühlten und etwas entspannten Gase, die im Energietauscher einen Teil ihrer Energie für die Aufladung der Verbrennungsluft abgegeben haben, werden nach ihrem Austritt in eine zweite Stufe der Gasturbine eingeleitet, wo sie mit dem im Hochdruckteil entspannten Treibgas vermischt werden und zusammen mit diesem die Gasturbine weiter antreiben.

Bei dieser Gasturbinenanordnung wird der Energietauscher mit einer vergleichsweise niedrigen Betriebstemperatur gefahren. Bei höheren Betriebstemperaturen wäre eine zusätzliche Wirkungsgraderhöhung der Anordnung möglich.

### DARSTELLUNG DER ERFINDUNG

Hier will die Erfindung Abhilfe schaffen. Die Erfindung, wie sie in den Ansprüchen gekennzeichnet ist, löst die Aufgabe, eine Gasturbinenanordnung zu schaffen, bei welcher mit einfachen Mitteln ein erhöhter Wirkungsgrad erreicht wird.

Die durch die Erfindung erreichten Vorteile sind im wesentlichen darin zu sehen, dass durch die Injektion von Wasser oder Wasserdampf der Volumenstrom in die Gasturbine wesentlich erhöht wird, ohne dass das Brennverhalten der Hauptbrennkammer dadurch negativ beeinflusst wird. Es zeigt sich zudem, dass die Energiegewinnung dieser Gasturbinenanordnung dem Carnot-Prozess angenähert erfolgt. Als besonders vorteilhaft erweist es sich, dass trotz der vergleichsweise sehr hohen Verbrennungstemperaturen im separaten Brenner die NOₓ-Bildung kaum ins Gewicht fällt, sodass hier insgesamt weniger NOₓ erzeugt wird als bei vergleichbaren Anordnungen.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen Ausführungsweg darstellt, näher erläutert.

### KURZE BESCHREIBUNG DER ZEICHNUNG

Es zeigen:
- Fig. 1: eine Prinzipskizze einer Gasturbinenanordnung,
- Fig. 2: eine Prinzipskizze einer ersten Brennkammer und
- Fig. 3: eine Prinzipskizze einer zweiten Brennkammer.

Bei allen Figuren sind gleich wirkende Elemente mit gleichen Bezugszeichen versehen.

### WEGE ZUR AUSFÜHRUNG DER ERFINDUNG

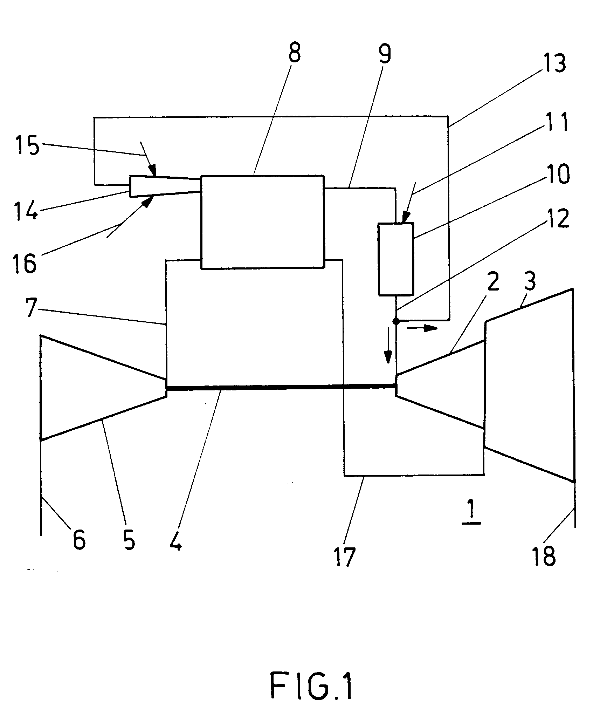

In der Fig. 1 ist eine Prinzipskizze einer erfindungsgemässen Gasturbinenanordnung dargestellt. Eine Gasturbine 1 mit einer ersten Stufe 2 und einer zweiten Stufe 3 wirkt über eine Welle 4 auf einen Verdichter 5 ein. Diese erste Stufe 2 kann auch als separate Hochdruckturbine ausgeführt sein und kann einen separaten Generator zur Erzeugung elektrischer Energie antreiben. Durch eine Leitung 6 strömt Luft in den verdichter 5 ein und wird komprimiert. Durch eine Leitung 7 strömt die komprimierte Luft aus dem Verdichter 5 in einen Energietauscher 8. Durch eine Leitung 9 wird die aufgeladene Luft vom Energietauscher 8 in eine Hauptbrennkammer 10 geführt. Ein Pfeil 11 deutet an, dass der Hauptbrennkammer 10 Brennstoff zugeführt wird, und zwar Öl oder Gas. Das in der Hauptbrennkammer 10 entstandene Treibgas unter hohem Druck wird durch eine Leitung 12 in die erste Stufe 2 der Gasturbine eingeleitet. Eine Leitung 13 zweigt von der Leitung 12 ab und führt zu einer separaten Brennkammer 14. In dieser Brennkammer 14 wird, wie ein Pfeil 15 andeutet, ein Brennstoff wie Öl oder Gas verbrannt. Zudem wird im Bereich dieser Brennkammer 14, wie ein Pfeil 16 andeutet, auch ein Fluid wie beispielsweise Wasser oder Waserdampf injektiert. Das erzeugte Treibgas strömt in den unmittelbar nach dieser Brennkammer 14 angeordneten Energietauscher 8 und verlässt diesen durch eine Leitung 17. Die Leitung 17 führt in die zweite Stufe 3 der Gasturbine 1. Das entspannte Gas verlässt die Gasturbine 1 durch eine Leitung 18. Es können jedoch der zweiten Stufe 3 noch weitere Gasturbinenstufen folgen. Ferner ist es möglich, dass die Leitung 18 in einen Wärmetauscher führt, wo dem entspannten Gas weitere nutzbare Wärmeenergie entzogen wird.

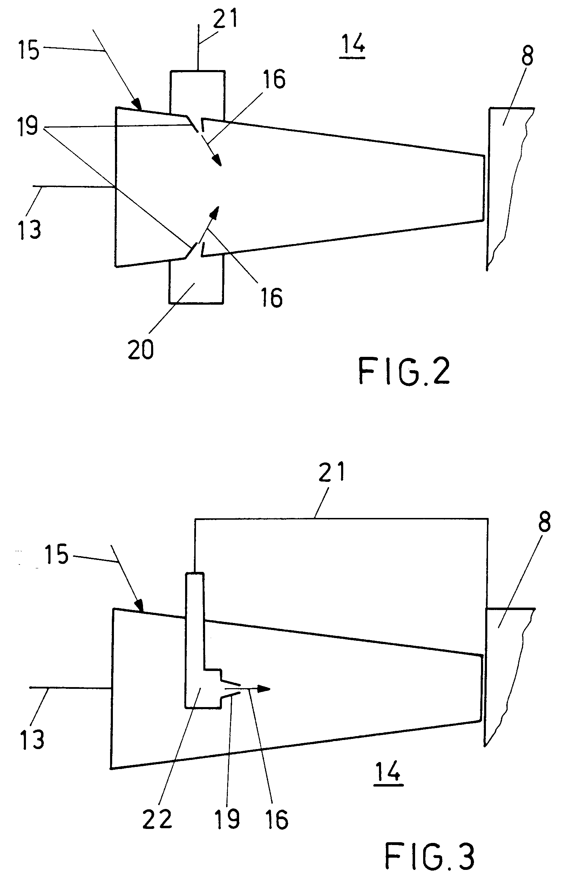

Fig. 2 zeigt eine Prinzipskizze einer Ausführung der separaten Brennkammer 14, welche rotationssymmetrisch um eine zentrale Achse aufgebaut ist. Der eigentliche Brenner ist nicht dargestellt, lediglich die Brennstoffzufuhr ist durch den Pfeil 15 angedeutet. Die Brennkammer 14 ist von einer mit Düsen 19 versehenen Ringkammer 20 umgeben, in welche durch eine Leitung 21 Wasser oder Wasserdampf eingespeist wird. Das Wasser oder der Wasserdampf wird durch die Düsen 19 in die Brennkammer 14 injektiert, wie die Pfeile 16 andeuten.

Fig. 3 zeigt eine Prinzipskizze einer weiteren Ausführung der separaten Brennkammer 14. Bei dieser Ausführung wird das Wasser oder der Wasserdampf durch eine Lanze 22 ins Zentrum der Brennkammer 14 geführt und dort durch eine Düse 16, die als Sprühdüse ausgebildet ist, die jedoch auch aus einer Vielzahl von Düsen zusammengesetzt sein kann, injektiert. Die Leitung 21 führt in diesem Fall Kühlwasser oder Wasserdampf, mit welchem Teile des Energietauschers 8 gekühlt wurden, der Lanze 22 zu.

Zur Erläuterung der Wirkungsweise soll zunächst die Fig. 1 näher betrachtet werden. In dem Verdichter 5 wird Luft komprimiert und strömt von dort aus durch die Leitung 7 in den Energietauscher 8, wo sie weiter verdichtet wird. Der Energietauscher 8 ist als Druckwellenmaschine ausgebildet und seine Wirkungsweise ist als bekannt vorauszusetzen, er kann ein- oder mehrstufig ausgebildet sein. Angetrieben wird der Energietauscher 8 vorzugsweise durch ein- und ausströmende Gase, es ist jedoch auch möglich, ihn von der Gasturbine 1 aus anzutreiben oder ihn mit einem separaten Antrieb zu versehen. Die aufgeladene Luft auf einem höheren Druckniveau verlässt den Energietauscher 8 durch die Leitung 9 und strömt in die Hauptbrennkammer 10. In der Hauptbrennkammer 10 findet eine überstöchiometrische Verbrennung statt, und ein Teil des so entstandenen Treibgases, welches unter hohem Druck steht, wird durch die Leitung 12 in die erste Stufe 2, die Hochdruckstufe der Gasturbine 1 geführt und treibt diese an.

Ein Teil des unter hohem Druck stehenden Treibgases wird aus der Leitung 12 in die Leitung 13 abgezweigt. Diese Abzweigung kann so ausgebildet sein, dass stets immer der gleiche Mengenanteil abgezweigt wird, es ist jedoch auch möglich die Abzweigung steuerbar zu gestalten, sodass die abgezweigte Menge beispielsweise abhängig vom Betriebszustand der gesamten Gasturbinenanordnung verändert werden kann. In der Regel wird eine möglichst grosse Menge des erzeugten Treibgases durch die Leitung 13 in die separate Brennkammer 14 abgeleitet, da dieser Weg über den Energietauscher 8 eine bessere Ausnützung der Energie des Treibgases und damit für diese Menge des Treibgases eine vorteilhafte Wirkungsgraderhöhung ermöglicht.

Das Treibgas weist noch einen genügenden Luftanteil auf, um in der Brennkammer 14 als Verbrennungsluft für den dort eingespeisten Brennstoff zu wirken. Die Brennkammer 14 wirkt demnach als eine Art Nachbrenner. Die Temperatur und der Druck des Treibgases wird nochmals erhöht. Derartig hohe Temperaturen sind nur möglich, weil der Brennkammer 14 der rotierende Energietauscher 8 unmittelbar nachgeschaltet ist, in welchem sich, wegen der dort stattfindenden Energietauschvorgänge lediglich eine mittlere Temperatur und nicht die volle Temperatur der eintretenden Treibgase einstellt. Auf diese Weise kann zwar der hohe Energieinhalt der heissen Treibgase vorteilhaft ausgenutzt werden ohne dass jedoch diese hohen Temperaturen eine Gefährdung für die Festigkeit der damit beanspruchten Materialien darstellen. Die hohen Temperaturen nach der Brennkammer 14 bewirken zudem keine nennenswerte NOₓ-Bildung, weil dieser Bereich von den Treibgasen sehr rasch durchlaufen wird.

Im Bereich der Brennkammer 14 wird zudem Wasser oder Wasserdampf injektiert und mit dem heissen Treibgas vermischt. Dies führt zu einer Überhitzung des Wassers oder des Wasserdampfes und damit verbunden zu einer Erhöhung des die Brennkammer 14 verlassenden Volumenstroms. Die kinetische Energie dieses Volumentroms wird im Energietauscher 8 dazu verwendet die im Verdichter 5 vorkomprimierte Luft auf das höhere Druckniveau zu bringen. Das den Volumenstrom bildende sehr heisse Gasgemisch wird, nachdem es sich im Energietauscher 8 entspannt hat, durch die Leitung 17 in die zweite Stufe 3 der Gasturbine 1 eingespeist. Bei der Einspeisung wird es mit dem die erste Stufe 2 verlassenden Treibgas, welches etwa die gleiche Temperatur und den gleichen Druck aufweist, vermischt. Die Ausnutzung der restlichen Energie des Treibgases und der des Gasgemisches erfolgt hier in der zweiten Stufe 3, es ist jedoch möglich je nach Betriebskonzept der Gasturbinenanordnung auch noch weitere Stufen vorzusehen.

Bei Versuchen zeigte es sich, dass die Injektion eines flüssigen oder dampfförmigen Mediums und die Vermischung mit dem heissen Treibgas eine beträchtliche Leistungssteigerung der Anordnung mit sich brachte. Die Ursache hierfür ist darin zu sehen, dass allein die Einwirkung des Volumenstromes des in den Energietauscher 8 eintretenden Gemisches massgebend ist für die Energieabgabe an die weiter aufzuladende, vorkomprimierte Luft, die Temperatur des Gemisches und auch dessen Massenstrom haben keinen Einfluss auf den Druckwellenvorgang für die Aufladung. Die Vergrösserung des Volumenstromes durch die beschriebene Injektion wirkt sich demnach sehr vorteilhaft aus, obwohl der Mischvorgang mit einer erheblichen Entropiezunahme verbunden ist. Bei dieser Art von Injektion ist ferner von entscheidender Bedeutung, dass die Hauptbrennkammer 10 nicht durch etwaige Rückwirkungen derselben in ihrem Brennverhalten negativ beeinflusst werden kann. Die Injektion kann also völlig unabhängig vom Betriebszustand der Hauptbrennkammer 10 gesteuert werden. Für die Hauptbrennkammer 10 ist eine derartige Injektion nicht vorgesehen.

Die Düsen 19, die entsprechend der Fig. 2 angeordnet sind, weisen Achsen auf, die sich auf der zentralen Achse der Brennkammer 14 in einem gemeinsamen Punkt schneiden. Die Neigung der Düsen kann nun so eingestellt werden, dass eine optimale Gemischbildung sichergestellt ist. Zudem ist es möglich durch Hilfsdüsen einen Teil des Wassers oder des Wasserdampfs entlang der Wand der Brennkammer 14 eintreten zu lassen, sodass diese Wand vor allzu grossen Hitzeeinwirkungen geschützt wird.

Durch-die Lanze 22, gemäss Fig. 3, wird eine besonders innige Gemischbildung erreicht. Es ist auch möglich eine Kombination der Düsenanordnungen gemäss Fig. 2 und Fig. 3 einzusetzen. Für die Kühlung des Energietauschers 8 verwendetes Wasser oder Wasserdampf kann, wie durch die Leitung 21 angedeutet, vorteilhaft für die Injektion in die Brennkammer 14 verwendet werden, da hierdurch ein zu grosser Temperaturunterschied zwischen Treibgas und Wasser oder Waserdampf und der damit verbundene Temperaturschock vermieden wird. Zudem ist es möglich, auch Wasser oder Wasserdampf die andere Teile der Gasturbinenanordnung gekühlt haben, für diese Injektion einzusetzen. Auch ist es sinnvoll, um Energieverluste infolge von Wärmeabstrahlungen zu vermeiden, den Verdichter 5, die Gasturbine 1 und den Energietauscher 8 auf engstem Raum zu einer kompakten Einheit zusammenzubauen. Eine weitere, wirtschaftlich besonders günstige Ausführungsart der Gasturbinenanordnung ergibt sich, wenn der Verdichter 4 eingespart und dafür ein mehrstufiger Energietauscher 8 eingesetzt werden kann.

## Patentansprüche

1. Gasturbinenanordnung mit mindestens einer mindestens zweistufigen Gasturbine (1), mit mindestens einem durch die Gasturbine (1) angetriebenen Verdichter (5), mit mindestens einem der Gasturbine (1) vorgeschalteten Energietauscher (8) von welchem aufgeladene Luft durch eine Leitung (9) einer Hauptbrennkammer (10) zugeführt wird, mit einer Leitung (12) durch welche in der Hauptbrennkammer (10) entstandenes Treibgas in die erste Stufe der Gasturbine (1) eingeleitet wird, wobei der Energietauscher (8) mit einer separaten Brennkammer (14) zusammenwirkt, die diesem unmittelbar vorgeschaltet ist, dadurch gekennzeichnet,
- dass die separate Brennkammer (14) als Nachbrennkammer für einen Teil der in der Hauptbrennkammer (10) erzeugten Gase ausgelegt ist, und
- dass im Bereich der separaten Brennkammer (14) Mittel für die zusätzliche Injektion eines flüssigen oder dampfförmigen Mediums vorgesehen sind.

2. Gasturbinenanordnung nach Anspruch 1, dadurch gekennzeichnet,
- dass die Injektion des flüssigen oder dampfförmigen Mediums unabhängig vom Betriebszustand der Hauptbrennkammer (10) steuerbar ist.

3. Gasturbinenanordnung nach einem der Ansprüche 1 oder 2, dadurch gekennzeichnet,
- dass als flüssiges oder dampfförmiges Medium Wasser oder Wasserdampf vorgesehen ist.

4. Gasturbinenanordnung nach Anspruch 3, dadurch gekennzeichnet,
- dass das Wasser oder der Wassrdampf vor der Injektion gesamthaft oder teilweise zur Kühlung von Teilen des Energietauschers (8) oder anderen Teilen der Gasturbinenanordnung einsetzbar ist.

5. Gasturbinenanordnung nach Anspruch 1, dadurch gekennzeichnet,
- dass die separate Brennkammer (14) rotationssymmetrisch um eine zentrale Achse aufgebaut ist,
- dass als Mittel für die Injektion auf einem Ring angeordnete Düsen (19) vorgesehen sind, welche jeweils eine, die zentrale Achse in einem gemeinsamen Punkt schneidende Düsenachse aufweisen, und
- dass die Lage des gemeinsamen Punktes im Hinblick auf den Vollastbetrieb der Brennkammer (14) optimiert ist.

6. Gasturbinenanordnung nach Anspruch 1, dadurch gekennzeichnet,
- dass als Mittel für die Injektion eine Lanze (22) mit mindestens einer Düse (19) im Zentrum der separaten Brennkammer (14) vorgesehen ist.

7. Gasturbinenanordnung nach einem der vorstehenden Ansprüche, dadurch gekennzeichnet,
- dass aus dem Energietauscher (8) austretendes heisses, entspanntes Gas durch eine Leitung (17) in eine zweite Stufe (3) der Gasturbine (1) eingeleitet wird.

8. Gasturbinenanordnung nach Anspruch 7, dadurch gekennzeichnet,
- dass nach der Hauptbrennkammer (10) Mittel zur Steuerung der durch die Leitung (13) abgeführten Treibgasmenge vorgesehen sind.

9. Gasturbinenanordnung nach Anspruch 1, dadurch gekennzeichnet,
- dass der Energietauscher (8) mindestens zweistufig ausgebildet ist.

10. Gasturbinenanordnung nach einem der voranstehenden Ansprüche, dadurch gekennzeichnet,
- dass die Gasturbine (1), der Verdichter (5) und der Energietauscher (8) auf engstem Raum zusammengebaut sind.

## Claims

1. Gas turbine arrangement with at least one gas turbine (1) with at least two stages, having at least one compressor (5) driven by the gas turbine (1), having at least one energy exchanger (8) installed upstream of the gas turbine (1), from which exchanger charged air is supplied to a main combustion chamber (10) via a conduit (9), with a conduit (12) through which driving gas arising in the main combustion chamber (10) is routed into the first stage of the gas turbine (1), the energy exchanger (8) acting in cooperation with a separate combustion chamber (14) which is installed immediately upstream of it, characterized in that
- the separate combustion chamber (14) is designed as an afterburner chamber for a part of the gases generated in the main combustion chamber (10), and
- means for the additional injection of a liquid or vapour medium are provided in the region of the separate combustion chamber (14).

2. Gas turbine arrangement according to Claim 1, characterized in that
- the injection of the liquid or vapour medium can be controlled independently of the operating condition of the main combustion chamber (10).

3. Gas turbine arrangement according to one of Claims 1 or 2, characterized in that
- water or steam is provided as the liquid or vapour medium.

4. Gas turbine arrangement according to Claim 3, characterized in that
- the water or the water vapour can be used in whole or in part for cooling parts of the energy exchanger (8) or other parts of the gas turbine arrangement before injection.

5. Gas turbine arrangement according to Claim 1, characterized in that
- the structure of the separate combustion chamber (14) is rotationally symmetrical about a central axis,
- nozzles (19) arranged on a ring are provided as means for the injection, which nozzles each have a nozzle axis intersecting the central axis at a common point, and
- the position of the common point is optimized with respect to the full load operation of the combustion chamber (14).

6. Gas turbine arrangement according to Claim 1, characterized in that
- a lance (22) with at least one nozzle (19) is provided in the centre of the separate combustion chamber (14) as the means for the injection.

7. Gas turbine arrangement according to one of the preceding claims, characterized in that
- hot, expanded gas emerging from the energy exchanger (8) is fed through a conduit (17) into a second stage (3) of the gas turbine (1).

8. Gas turbine arrangement according to Claim 7, characterized in that
- means for controlling the driving gas quantity led off through the conduit (13) are provided after the main combustion chamber (10).

9. Gas turbine arrangement according to Claim 1, characterized in that
- the energy exchanger (8) is of at least two-stage design.

10. Gas turbine arrangement according to one of the preceding claims, characterized in that
- the gas turbine (1), the compressor (5) and the energy exchanger (8) are combined within the most compact space.

## Revendications

1. Installation de turbine à gaz avec au moins une turbine à gaz (1) à au moins deux étages, avec au moins un compresseur (5) entraîné par la turbine à gaz (1), avec au moins un échangeur d'énergie (8) disposé avant la turbine à gaz (1), par lequel de l'air de suralimentation est fourni à une chambre de combustion principale (10) via une conduite (9), avec une conduite (12) par laquelle un gaz propulseur formé dans la chambre de combustion principale (10) est introduit dans le premier étage de la turbine à gaz (1), dans laquelle l'échangeur d'énergie (8) coopère avec une chambre de combustion séparée (14) qui le précède immédiatement, caractérisée
- en ce que la chambre de combustion séparée (14) constitue une chambre de postcombustion pour une partie des gaz produits dans la chambre de combustion principale (10); et
- en ce qu'il est prévu dans la région de la chambre de combustion séparée (14) des moyens pour l'injection additionnelle d'un agent liquide ou sous forme de vapeur.

2. Installation de turbine à gaz suivant la revendication 1, caractérisée
- en ce que l'injection de l'agent liquide ou sous forme de vapeur peut être réglée indépendamment de l'état de fonctionnement de la chambre de combustion principale (10).

3. Installation de turbine à gaz suivant l'une des revendications 1 ou 2, caractérisée
- en ce qu'en guise d'agent liquide ou sous forme de vapeur, il est prévu l'eau ou la vapeur d'eau.

4. Installation de turbine à gaz suivant la revendication 3, caractérisée
- en ce que l'eau ou la vapeur d'eau est, avant l'injection, utilisable entièrement ou en partie pour le refroidissement de parties de l'échangeur d'énergie (8) ou d'autres parties de l'installation de turbine à gaz.

5. Installation de turbine à gaz suivant la revendication 1, caractérisée
- en ce que la chambre de combustion séparée (14) est construite avec une symétrie de révolution autour d'un axe central,
- en ce qu'en guise de moyens pour l'injection, il est prévu des gicleurs (19) disposés sur un anneau, qui présentent chacun un axe de gicleur coupant l'axe central en un point commun, et
- en ce que la position du point commun est optimisée par rapport au fonctionnement à pleine charge de la chambre de combustion (14).

6. Installation de turbine à gaz suivant la revendication 1, caractérisée
- en ce qu'en guise de moyens pour l'injection, il est prévu une lance (22) avec au moins un gicleur (19) au centre de la chambre de combustion séparée (14).

7. Installation de turbine à gaz suivant l'une des revendications précédentes, caractérisée
- en ce qu'un gaz chaud, détendu, sortant de l'échangeur d'énergie (8) est introduit dans un deuxième étage (3) de la turbine à gaz (1) via une conduite (17).

8. Installation de turbine à gaz suivant la revendication 7, caractérisée
- en ce qu'après la chambre de combustion principale (10), il est prévu des moyens pour le réglage du débit de gaz propulseur véhiculé par la conduite (13).

9. Installation de turbine à gaz suivant la revendication 1, caractérisée
- en ce que l'échangeur d'énergie (8) présente au moins deux étages.

10. Installation de turbine à gaz suivant l'une des revendications précédentes, caractérisée
- en ce que la turbine à gaz (1), le compresseur (5) et l'échangeur d'énergie (8) sont rassemblés sur un espace très étroit.
